# EUROPEAN PATENT SPECIFICATION

(11) **EP 2 067 948 B1**
(45) Date of publication and mention of the grant of the patent: **26.10.2011**
(21) Application number: 08170502.2
(22) Date of filing: 02.12.2008
(51) Int. Cl.: F01N 3/08

(54) **Exhaust gas purifying system**
Abgasreinigungssystem
Système de purification de gaz d'échappement

(30) Priority: 03.12.2007 JP 2007312220
(43) Date of publication of application: 10.06.2009
(73) Proprietor: Kabushiki Kaisha Toyota Jidoshokki, Kariya-shi, Aichi 448-8671 (JP)
(72) Inventor: Koide, Naotaka, Kariya-shi Aichi 448-8671 (JP); Ikeda, Nami, Kariya-shi Aichi 448-8671 (JP); Kawauchi, Hiroyasu, Kariya-shi Aichi 448-8671 (JP); Kato, Yoshifumi, Kariya-shi Aichi 448-8671 (JP)
(74) Representative: TBK

(56) References cited:
- WO-A-98/07968
- WO-A-2007/125394
- DE-A1- 10 049 177
- US-A- 5 022 975
- US-A- 6 036 840
- US-A1- 2002 073 692

## Description

### BACKGROUND OF THE INVENTION

The present invention relates to an exhaust gas purifying system.

In a known purifying system, a diesel particulate filter (DPF) or a selective catalytic reduction (SCR) catalyst with urea is used for purifying exhaust gas discharged from an internal combustion engine installed in a vehicle. Some of the systems are operable to control the purifying capacity in accordance with conditions of exhaust gas by adjusting the temperature of the system or of exhaust gas.

Such a system controlling its purifying capacity by adjusting the temperature is disclosed in Japanese Unexamined Patent Application Publication No. 2004-124855. The publication discloses post fuel injection or delayed fuel injection performed for increasing the DPF temperature thereby to increase the exhaust gas purifying capacity. On the other hand, an intake throttle is fully opened for decreasing the DPF temperature thereby to decrease the exhaust gas purifying capacity.

In a conventional exhaust gas purifying system, however, it has been difficult to accurately control the purifying capacity. In the above system disclosed in the reference No. 2004-124855, for example, a time lag occurs from the time when adjusting temperature is performed to the time when the temperature is actually increased as controlled. In addition, the system is susceptible to errors due to external disturbances. Therefore, it is difficult for such system to ensure the controlling accuracy. Particularly, since the system controls factors that are related to the internal combustion engine such as the fuel injection and the intake throttle, it is difficult for the system to control the purifying capacity without taking account of running conditions of the vehicle.

Document DE 100 49 177 A1 discloses a method to purify exhaustion gas from oxides of nitrogen using an absorbing body with 2 electrodes acting as a sensor.

Document WO 98/07968 discloses a device for reduction of oxides of nitrogen using an ammeter as a sensor to measure the concentration of NOₓ compounds in the sensor's environment.

The present invention is directed to providing an exhaust gas purifying system so as to easily and accurately control the exhaust gas purifying capacity without affecting running conditions of the vehicle.

### SUMMARY OF THE INVENTION

In accordance with an aspect of the present invention, an exhaust gas purifying system is used for purifying exhaust gas discharged from an internal combustion engine installed in a vehicle. The exhaust gas purifying system includes an electrochemical device and a control device. The electrochemical device includes an anode, a cathode and an electrolyte layer disposed between the anode and the cathode. The control device is operable to control the internal combustion engine and the electrochemical device. The control device is operable the receive data on a condition of the internal combustion engine, to recognize a state of the internal combustion engine, and to control an amount of electric current to be supplied to the electrochemical device based on the data. The data represents amount of exhaust gas. When the control device recognizes that the amount of exhaust gas is increased, the control device increases the amount of electric current to be supplied to the electrochemical device.

Other aspects and advantages of the invention will become apparent from the following description, taken in conjunction with the accompanying drawings, illustrating by way of example the principles of the invention.

### BRIEF DESCRIPTION OF THE DRAWINGS

The features of the present invention that are believed to be novel are set forth with particularity in the appended claims. The invention together with objects and advantages thereof, may best be understood by reference to the following description of the presently preferred embodiments together with the accompanying drawings in which:
Fig. 1 is an illustrative view showing an arrangement of an exhaust gas purifying system and the related devices according to a first preferred embodiment of the present invention;
Fig. 2 is a schematic view of an electrochemical device according to Fig. 1; and
Fig. 3 is an illustrative view showing the operation of the electrochemical device of Fig. 1 in purifying exhaust gas.

### DETAILED DESCRIPTION OF THE PREFERRED EMBODIMENTS

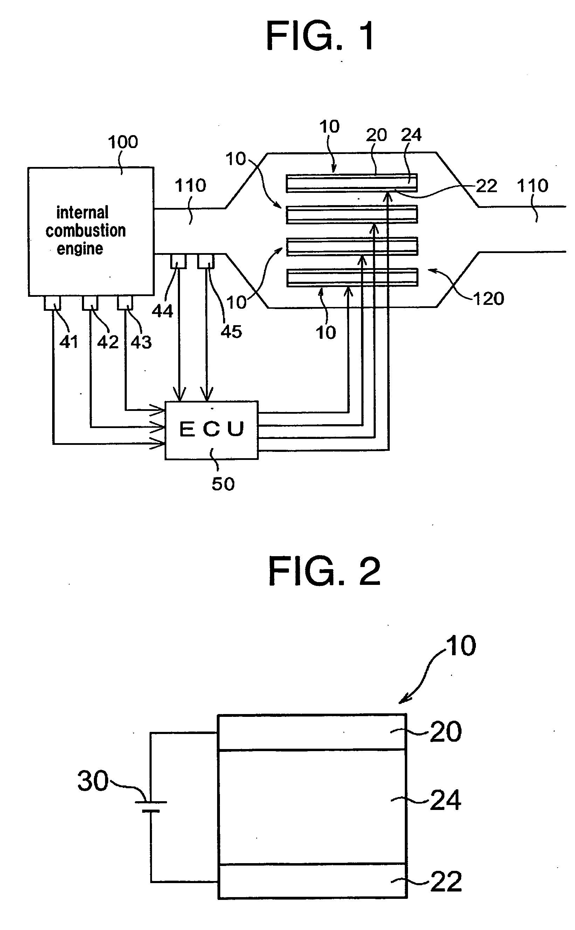

The following will describe the first preferred embodiment of the present invention with reference to Figs. 1 through 3. Fig. 1 shows an arrangement of an exhaust gas purifying system 120 and the related devices according to the first preferred embodiment. The exhaust gas purifying system 120 is used for purifying exhaust gas discharged from an internal combustion engine 100 installed in a vehicle. The purification is achieved by decomposing nitrogen oxides (NOx) and particulate matters (PM) contained in the exhaust gas as will be described below.

As shown in Fig.1, an exhaust passage pipe 110 is connected to the internal combustion engine 100. The exhaust gas purifying system 120 is disposed in the middle of the exhaust passage pipe 110. Exhaust gas discharged from the internal combustion engine 100 into the exhaust passage pipe 110 passes through the exhaust gas purifying system 120. Then, purified gas is discharged out from the exhaust passage pipe 110. The exhaust gas purifying system 120 includes a plurality of electrochemical devices 10. The electrochemical device 10, which is known also as an electrochemical reactor, is used for purifying exhaust gas by electrochemical reaction. The electrochemical reaction performs by supplying electric current from an external battery. The electrochemical device 10 includes an anode 20, a cathode 22 and an electrolyte layer 24 disposed between the anode 20 and the cathode 22. The electrochemical device 10 is a plate-like shaped and has the anode 20 and the cathode 22 on the opposite surfaces thereof.

Each electrochemical device 10 is spaced apart at a predetermined interval in the same orientation such that each surface of the electrodes of the electrochemical devices 10 is parallel to the flow direction of exhaust gas. Specially, the anode 20 and the cathode 22 of any two adjacent electrochemical devices 10 face and extend parallel to each other. Such arrangement of the electrochemical devices 10 allows the exhaust gas to pass through the spaces between the each anode 20 and the cathode 22 in the exhaust gas purifying system 120.

Fig. 2 is a schematic view of one of the electrochemical devices 10. The electrochemical device 10 is electrically connected at the anode 20 and the cathode 22 to an external battery 30. The anode 20 of the electrochemical device 10 is connected to the positive electrode of the battery 30, while the cathode 22 of the electrochemical device 10 is connected to the negative electrode of the battery 30. The electrolyte layer 24 of the electrochemical device 10 includes electrolyte and allows ions to move between the anode 20 and the cathode 22.

The anode 20 and the cathode 22 of the electrochemical device 10 are made of materials functioning as the respective electrodes. For example, the anode 20 is made of a screen-printed platinum (Pt) based material while the cathode 22 is made of a screen-printed nickel (Ni) based material. The electrolyte layer 24 is made of ion-conductive electrolyte material such as yttria-stabilized zirconia (YSZ) so as to conduct proton or oxygen ion. The electrochemical device 10 operates most effectively under a temperature in the range between 600 and 800 degrees Celsius. The optimal temperature range varies depending on the chemical composition of the electrolyte layer 24.

Referring to Fig.1, the internal combustion engine 100 and the exhaust passage pipe 110 are provided with detectors for detecting various data on condition of the internal combustion engine 100. The detectors include an engine speed sensor 41, an accelerator position sensor 42, a throttle position sensor 43, an oxygen sensor 44 and a temperature sensor 45. The engine speed sensor 41, the accelerator position sensor 42 and the throttle position sensor 43 are mounted to the internal combustion engine 100. The speed sensor 41 detects the engine speed of the internal combustion engine 100. The accelerator position sensor 42 detects the accelerator pedal position. The throttle position sensor 43 detects the throttle valve opening. The oxygen sensor 44 and the temperature sensor 45 are mounted to the exhaust passage pipe 110. The oxygen sensor 44 detects the oxygen concentration in exhaust gas. The temperature sensor 45 detects the exhaust gas temperature. Each of the sensors 41 through 45 does not necessarily have to be located at the position as described above and illustrated in Fig. 1. The accelerator position sensor 42 and the throttle position sensor 43 may be mounted to an accelerator pedal and a throttle valve respectively. In the illustrated embodiment, the oxygen sensor 44 and the temperature sensor 45 are mounted to the exhaust passage pipe 110 on the side upstream of the exhaust gas purifying system 120 as viewed in the direction of the flow of exhaust gas. Alternatively, the sensors 44, 45 may be arranged on the opposite side downstream of the exhaust gas purifying system 120.

The vehicle is provided with an engine control unit (ECU) 50 serving as a control device receiving the data from the sensors 41 through 45. The ECU 50 is electrically connected to each of the engine speed sensor 41, the accelerator position sensor 42, the throttle position sensor 43, the oxygen sensor 44 and the temperature sensor 45 so as to receive the data. The ECU 50 receives the data from the sensors 41 through 45 periodically, for example, at every second.

The ECU 50 is also electrically connected to each of the electrochemical devices 10 for controlling its performance by regulating the amount of electric current to be supplied to each of the electrochemical devices 10 according to the data that represents the condition of the internal combustion engine 100. The electric current control is accomplished by changing the state of an electrical circuit connecting the battery 30 and the electrochemical device 10 periodically, for example, at every one second.

Each of the detected values has a positive correlation with the amount of exhaust gas. That is, the amount of exhaust gas is increased with an increase of the engine speed, the accelerator pedal position, the throttle valve opening, the oxygen concentration in exhaust gas and the exhaust gas temperature, and vice versa.

The ECU 50 controls the operation of the electrochemical device 10 in a way that the amount of electric current to be supplied to the electrochemical device 10 is increased in accordance with an increase of the amount of exhaust gas. Namely, when the data represents an increase of the amount of exhaust gas, the ECU 50 recognizes a state that the amount of exhaust gas is increased and increases the amount of electric current to be supplied to the respective electrochemical devices 10. On the other hand, when the data represents a decrease of the amount of exhaust gas, the ECU 50 recognizes a state that the exhaust gas is decreased and decreases the amount of electric current to be supplied to the respective electrochemical devices 10. In other words, the ECU 50 controls the amount of electric current to be supplied to the electrochemical device 10 in such a manner that the amount of electric current is a monotonically increasing function of each value of the engine speed, the accelerator pedal position, the throttle valve opening, oxygen concentration in exhaust gas and exhaust gas temperature. The functional relation between the amount of electric current supplied to the electrochemical device 10 and each of the values (engine speed, accelerator pedal position, throttle valve opening, oxygen concentration in exhaust gas and exhaust gas temperature) can be specified based on experimental results and the like.

Referring to Fig. 1, the ECU 50 is connected to the electrochemical devices 10 in such a way that the ECU 50 controls the respective electrochemical devices 10 individually. Alternatively, the ECU 50 may be connected in such a way that the ECU 50 controls a plurality of or all of the electrochemical devices 10 collectively. Furthermore, the ECU 50 also serves as a common ECU for controlling other various operations of the vehicle.

The following will describe the operation of the exhaust gas purifying system 120. Referring to Fig.1, exhaust gas produced by running the internal combustion engine 100 is discharged and flows into the exhaust gas purifying system 120 through the exhaust passage pipe 110. Then, the exhaust gas flows inside the exhaust gas purifying system 120 in contact with or flowing through spaces around the surfaces of the anode 20 and the cathode 22 of the electrochemical devices 10. While the exhaust gas is passing through the exhaust gas purifying system 120, PM and NOx contained in the exhaust gas are decomposed with the result that the exhaust gas is purified.

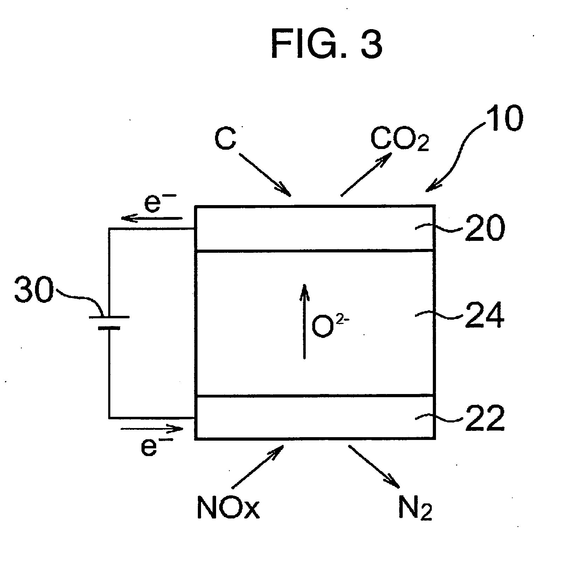

Fig.3 shows the operation of the electrochemical device 10 in purifying exhaust gas. Carbon in PM contained in exhaust gas is reacted on or around the surface of the anode 20 with oxygen ions conducted through the electrolyte layer 24 thereby to produce carbon dioxide and electrons. Electrons are attracted by the positive electrode of the battery 30 and moved to the battery 30. Carbon dioxide is discharged out of the exhaust passage pipe 110 to the atmosphere. PM is thus decomposed at the anode 20, with the result that the exhaust gas is purified. Nitrogen oxides (NOx) in the exhaust gas are reacted on or around the surface of the cathode 22 with electrons supplied from the battery 30 thereby to produce oxygen ions and nitrogen. Oxygen ions are attracted by the anode 20 of the electrochemical device 10 and moved through the electrolyte layer 24. Nitrogen is discharged out of the exhaust passage pipe 110 to the atmosphere. NOx is thus decomposed at the cathode 22, with the result that the exhaust gas is purified.

It is noted that the performance of the electrochemical device 10, which is the exhaust gas purifying capacity, depends on the amount of electric current supplied to the electrochemical device 10. The larger the amount of electric current from the anode 20 to the cathode 22 through the electrolyte layer 24 is, the higher the capacity to decompose PM and NOx in exhaust gas is. Consequently, the larger amount of exhaust gas is purified.

The following will describe the control by the ECU 50 and the process for purifying exhaust gas in the exhaust gas purifying system 120. While the vehicle is running under a normal condition, the internal combustion engine 100 is also running under a normal condition and the data is almost constant. In such a case, the ECU 50 maintains the amount of electric current to be almost constant. When the vehicle driver operates the accelerator to change the position, for example, to increase the engine speed. Then, the engine speed sensor 41 and the accelerator position sensor 42 detect the changes respectively and the data representing such changes are inputted into the ECU 50. Since the data represent an increase of amount of exhaust gas, the ECU 50 increases the amount of electric current to be supplied to the electrochemical device 10. As a result, the exhaust gas purifying capacity of the electrochemical device 10 is increased. In this way, purifying of increased amount of exhaust gas is accomplished appropriately.

As described above, the exhaust gas purifying system 120 according to the preferred embodiment includes the electrochemical devices 10 and the ECU 50. The ECU 50 is operable to control the exhaust gas purifying capacity by changing the amount of electric current to be supplied to the electrochemical device 10 based on the data on the conditions of the internal combustion engine 100. Thus, controlling of the exhaust gas purifying capacity of the exhaust gas purifying system 120 is achieved easily and accurately.

Since it is easy to control the amount of electric current, the exhaust gas purifying system 120 of the present invention is capable of controlling the exhaust gas purifying capacity more easily and accurately as compared with the conventional systems that control the system temperature or exhaust gas temperature for purification of exhaust gas. Furthermore, the exhaust gas purifying system 120 of the present invention is capable of avoiding damages caused by heat generated in the system. More advantageously, the exhaust gas purifying system 120 controlling the amount of electric current will not affect running conditions of other vehicle equipments such as electronic fuel injection system and, therefore, it contributes to fuel consumption.

In the above-described preferred embodiment, the data includes engine speed, accelerator pedal position, throttle valve opening, oxygen concentration in the exhaust gas and exhaust gas temperature. In addition, the data may include other data such as the amount of PM or NOx concentration in exhaust gas. For example, a sensor for detecting the amount of PM or NOx concentration in the exhaust gas may be provided in the exhaust passage pipe 110 to control the amount of electric current to be supplied to the electrochemical device 10 based on the detected amount of PM or NOx concentration. In this case, the ECU 50 operates such that the amount of electric current is increased in accordance with an increase of the detected amount of PM or NOx concentration. Alternatively, an acceleration sensor for detecting accelerated velocity may be installed in the vehicle to control the amount of electric current to be supplied to the electrochemical device 10 depending on the detected velocity. In this case, the ECU 50 is operated such that the amount of electric current is increased with an increase of the detected velocity. The data may include further other values such as those indicative of the so-called operating modes of the vehicle.

Also in the above-described preferred embodiment, the ECU 50 operable to control the exhaust gas purifying capacity by changing the amount of electric current to be supplied to the electrochemical device 10. Alternatively, the ECU 50 may be operable to control the exhaust gas purifying capacity by changing the voltage to be applied across the electrochemical devices 10 of the exhaust gas purifying system 120.

Therefore, the present examples and embodiments are to be considered as illustrative and not restrictive, and the invention is not to be limited to the details given herein but may be modified within the scope of the appended claims.

An exhaust gas purifying system is used for purifying exhaust gas discharged from an internal combustion engine installed in a vehicle. The exhaust : gas purifying system includes an electrochemical device and a control device. The electrochemical device includes an anode, a cathode and an electrolyte layer disposed between the anode and the cathode. The control device is operable to control the internal combustion engine and the electrochemical device. The control device receives data on condition of the internal combustion engine and controls amount of electric current to be supplied to the electrochemical device based on the data. The data represents amount of exhaust gas. When the control device recognizes that the amount of exhaust gas is increased, the control device increases the amount of electric current to be supplied to the electrochemical device.

## Claims

1. An exhaust gas purifying system (120) for purifying exhaust gas discharged from an internal combustion engine (100) installed in a vehicle, comprising:
an electrochemical device (10) including an anode (20), a cathode (22), and an electrolyte layer (24) disposed between the anode (20) and the cathode (22); and
a control device (50) that controls the internal combustion engine (100) and the electrochemical device (10), that receives data on a condition of the internal combustion engine (100), that recogizes a state of the internal combustion engine (100), and that controls an amount of electric current to be supplied to the electrochemical device (10) based on the data.

2. The exhaust gas purifying system (120) according to claim 1, wherein the data represents amount of exhaust gas, wherein when the control device (50) recognizes that the amount of exhaust gas is increased, the control device (50) increases the amount of electric current to be supplied to the electrochemical device (10), and when the control device (50) recognizes that the amount of exhaust gas is decreased, the control device (50) decreases the amount of electric current to be supplied to the electrochemical device (10).

3. The exhaust gas purifying system (120) according to claim 1 or 2, wherein the electrochemical device (10) is a plate-like shaped and has the anode (20) and the cathode (22) on the opposite surfaces thereof, the electrolyte layer (24) allows ions to move between the anode (20) and the cathode (22).

4. The exhaust gas purifying system (120) according to any one of claims 1 through 3, wherein the data is at least one of an engine speed, an accelerator pedal position, a throttle valve opening, oxygen concentration in exhaust gas and exhaust gas temperature.

5. The exhaust gas purifying system (120) according to any one of claims 1 through 4, wherein the anode (20) is made of platinum based material.

6. The exhaust gas purifying system (120) according to any one of claims 1 through 5, wherein the cathode (22) is made of nickel based material.

7. The exhaust gas purifying system (120) according to any one of claims 1 through 6, wherein the exhaust gas purifying system (120) having a plurality of electrochemical devices (10) which are placed in an exhaust passage pipe (110) at a predetermined interval each other in the same orientation such that each surface of the anode (20) and the cathode (22) is parallel to the exhaust gas flow.

8. An exhaust gas purifying method for purifying exhaust gas discharged from an internal combustion engine (100) installed in a vehicle, wherein the exhaust gas purifying system (120) includes an electrochemical device (10) having an anode (20), a cathode (22) and an electrolyte layer (24) disposed between the anode (20) and the cathode(22), the method comprising steps of:
detecting data on a condition of the internal combustion engine (100), recognizing a state of the internal combustion engine (100), and
controlling an amount of electric current to be supplied to the electrochemical device (10) based on the data.

## Patentansprüche

1. Abgasreinigungssystem (120) zum Reinigen von Abgas, das aus einer internen Verbrennungsmaschine (100) entladen wird, die in einem Fahrzeug installiert ist, mit:
einer elektrochemischen Einrichtung (10) einschließlich einer Anode (20), einer Kathode (22), und einer Elektrolytschicht (24), die zwischen der Anode (20) und der Kathode (22) angeordnet ist; und
einer Steuerungseinrichtung (50), die die interne Verbrennungsmaschine (100) und die elektrochemische Einrichtung (10) steuert, die Daten über einen Zustand der internen Verbrennungsmaschine (100) empfängt, die einen Zustand der internen Verbrennungsmaschine (100) erkennt, und die eine Menge von der elektrochemischen Einrichtung (10) zuzuführendem elektrischen Strom basierend auf den Daten steuert.

2. Abgasreinigungssystem (120) nach Anspruch 1, wobei die Daten eine Menge von Abgas repräsentieren, wobei die Steuerungseinrichtung (50) die Menge von der elektrochemischen Einrichtung (10) zuzuführendem elektrischen Strom erhöht, wenn die Steuerungseinrichtung (50) erkennt, dass die Menge von Abgas erhöht ist, und wobei die Steuerungseinrichtung (50) die Menge von der elektrochemischen Einrichtung (10) zuzuführendem elektrischen Strom verringert, wenn die Steuerungseinrichtung (50) erkennt, dass die Menge von Abgas verringert ist.

3. Abgasreinigungssystem (120) nach Anspruch 1 oder 2, wobei die elektrochemische Einrichtung (10) plattenähnlich geformt ist, und die Anode (20) und die Kathode (22) auf gegenüberliegenden Flächen davon aufweist, und die Elektrolytschicht (24) es Ionen ermöglicht, sich zwischen der Anode (20) und der Kathode (22) zu bewegen.

4. Abgasreinigungssystem (120) nach einem der Ansprüche 1 bis 3, wobei die Daten zumindest eines einer Motorgeschwindigkeit, einer Beschleunigungspedalposition, einer Drosselventilöffnung, einer Sauerstoffkonzentration in Abgas und einer Abgastemperatur aufweisen.

5. Abgasreinigungssystem (120) nach einem der Ansprüche 1 bis 4, wobei die Anode (20) aus einem Material gemacht ist, das auf Platin basiert.

6. Abgasreinigungssystem (120) nach einem der Ansprüche 1 bis 5, wobei die Kathode (22) aus einem Material gemacht ist, das auf Nickel basiert.

7. Abgasreinigungssystem (120) nach einem der Ansprüche 1 bis 6, wobei das Abgasreinigungssystem (120) eine Vielzahl von elektrochemischen Einrichtungen (10) aufweist, die in einer Abgasdurchflussleitung (110) in vorbestimmten Abständen voneinander in der gleichen Orientierung platziert sind, so dass jede Oberfläche der Anode (20) und der Kathode (22) parallel zu dem Abgasfluss ist.

8. Abgasreinigungsverfahren zum Reinigen von Abgas, das von einer internen Verbrennungsmaschine (100) entladen wird, die in einem Fahrzeug installiert ist, wobei das Abgasreinigungssystem (120) eine elektrochemische Einrichtung (10) mit einer Anode (20), einer Kathode (22) und einer Elektrolytschicht (24) enthält, die zwischen der Anode (20) und der Kathode (22) angeordnet ist, wobei das Verfahren Schritte aufweist:
Erfassen von Daten über einen Zustand der internen Verbrennungsmaschine (100), Erkennen eines Zustands der internen Verbrennungsmaschine (100), und
Steuern einer der elektrochemischen Einrichtung (10) zuzuführenden Menge von elektrischem Strom basierend auf den Daten.

## Revendications

1. Système de purification des gaz d'échappement (120) destiné à purifier des gaz d'échappement évacués à partir d'un moteur à combustion interne (100) installé dans un véhicule, comprenant :
un dispositif électrochimique (10) comportant une anode (20), une cathode (22), et une couche d'électrolyte (24) disposée entre l'anode (20) et la cathode (22) ; et
un dispositif de commande (50) qui commande le moteur à combustion interne (100) et le dispositif électrochimique (10), qui reçoit une donnée sur une condition du moteur à combustion interne (100), qui identifie un état du moteur à combustion interne (100), et qui commande une quantité de courant électrique à fournir au dispositif électrochimique (10) sur la base de la donnée.

2. Système de purification des gaz d'échappement (120) selon la revendication 1, dans lequel la donnée représente la quantité des gaz d'échappement, dans lequel lorsque le dispositif de commande (50) identifie que la quantité des gaz d'échappement augmente, le dispositif de commande (50) augmente la quantité du courant électrique à fournir au dispositif électrochimique (10), et lorsque le dispositif de commande (50) identifie que la quantité des gaz d'échappement diminue, le dispositif de commande (50) diminue la quantité du courant électrique à fournir au dispositif électrochimique (10).

3. Système de purification des gaz d'échappement (120) selon la revendication 1 ou 2, dans lequel le dispositif électrochimique (10) est une forme de plaque et possède l'anode (20) et la cathode (22) sur ses surfaces opposées, la couche d'électrolyte (24) permet aux ions de se déplacer entre l'anode (20) et la cathode (22).

4. Système de purification des gaz d'échappement (120) selon l'une quelconque des revendications 1 à 3, dans lequel la donnée est au moins l'une de la vitesse moteur, de la position de la pédale de l'accélérateur, de l'ouverture du papillon des gaz, de la concentration de l'oxygène dans les gaz d'échappement et de la température des gaz d'échappement.

5. Système de purification des gaz d'échappement (120) selon l'une quelconque des revendications 1 à 4, dans lequel l'anode (20) est réalisée en matériau à base de platine.

6. Système de purification des gaz d'échappement (120) selon l'une quelconque des revendications 1 à 5, dans lequel la cathode (22) est réalisée en matériau à base de nickel.

7. Système de purification des gaz d'échappement (120) selon l'une quelconque des revendications 1 à 6, dans lequel le système de purification des gaz d'échappement (120) ayant une pluralité de dispositifs électrochimiques (10) qui sont placés dans un tuyau de passage d'échappement (110) à intervalle prédéterminé les uns des autres dans la même orientation de sorte que chaque surface de l'anode (20) et de la cathode (22) soit parallèle au débit des gaz d'échappement.

8. Système de purification des gaz d'échappement (120) destiné à purifier des gaz d'échappement évacués à partir d'un moteur à combustion interne (100) installé dans un véhicule, dans lequel le système de purification des gaz d'échappement (120) comporte un dispositif électrochimique (10) ayant une anode (20), une cathode (22) et une couche d'électrolyte (24) disposée entre l'anode (20) et la cathode (22) , le procédé comprenant les étapes qui consistent :
à détecter une donnée sur une condition du moteur à combustion interne (100), identifiant un état du moteur à combustion interne (100), et
à commander une quantité du courant électrique à fournir au dispositif électrochimique (10) sur la base de la donnée.
